# EUROPEAN PATENT APPLICATION

(11) **EP 4 497 644 A1**
(43) Date of publication of application: **29.01.2025**
(21) Application number: 23213321.5
(22) Date of filing: 30.11.2023
(51) Int. Cl.: B60W 30/09

(54) **VEHICLE RISK AVOIDANCE METHOD AND SYSTEM, VEHICLE, AND STORAGE MEDIUM**

(30) Priority: 26.07.2023 CN 202310928222
(71) Applicant: Chongqing Changan Automobile Co., Ltd., Chongqing 400023 (CN)
(72) Inventor: YANG, Yue, Chongqing 400023 (CN); SONG, Lincong, Chongqing 400023 (CN); ZHOU, Hongwei, Chongqing 400023 (CN); HE, Wen, Chongqing 400023 (CN)
(74) Representative: M. Zardi & Co S.A.

(57) **Abstract**

Disclosed in the embodiments are a vehicle risk avoidance method and system, a vehicle, and a storage medium in the technical field of intelligent driving. The method includes the following steps: obtaining first motion state information of a target vehicle and obstacle information of a target obstacle at a plurality of consecutive moments, the obstacle information including two or more of an obstacle type, an obstacle location, obstacle boundary information, and second motion state information; executing a risk assessment strategy corresponding to the obstacle type according to the first motion state information and the obstacle information corresponding to each moment, to determine a risk assessment result of whether the target vehicle collides with the target obstacle; and determining, if a plurality of risk assessment results corresponding to the plurality of moments satisfy a risk condition, a target risk assessment result from the plurality of risk assessment results, and generating a target security protection strategy corresponding to the target risk assessment result to avoid a collision risk.

## Description

### Field of the Invention

The present application relates to but is not limited to, the technical field of intelligent driving, and in particular to a vehicle risk avoidance method and system, a vehicle, and a storage medium.

### Background of the Invention

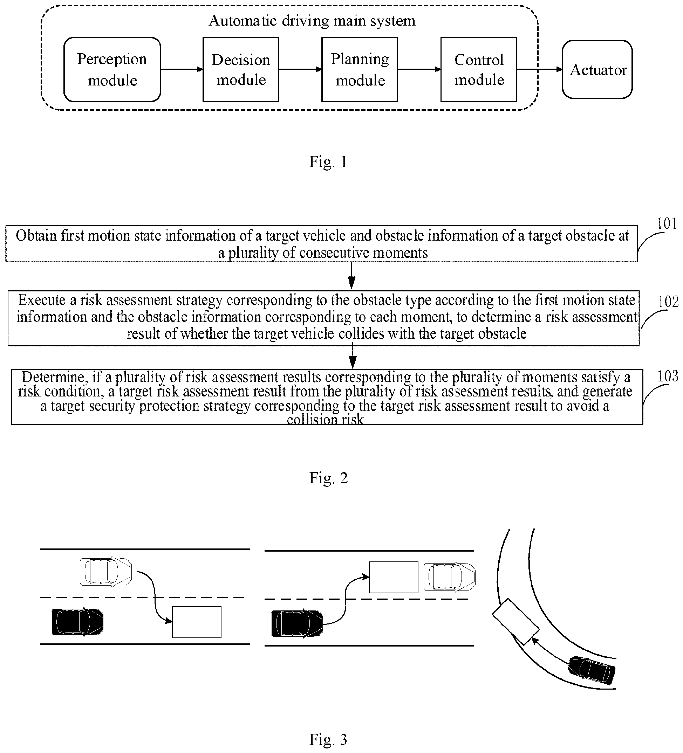

With the development of artificial intelligence (AI) technology, intelligent driving has made great progress, from the early adaptive cruise control (ACC) system, and autonomous emergency braking (AEB) function to the current high-speed/urban navigate on autopilot (NOA), such as the intelligent driving system in Fig. 1. Due to the increasingly powerful vehicle functions accompanied by the expansion of application scenarios, as well as the insufficient performance of the intelligent driving system itself and the misuse of the intelligent driving function by the driver, the safety problems of expected functions, such as the collision of other vehicles overturning on the road and crossing bicycles gradually appear. To reduce the risk of intelligent driving systems and improve the expected function of intelligent driving, it is necessary to provide a new vehicle risk avoidance method.

### Summary of the Invention

An object of the present application is to provide a vehicle risk avoidance method and system, a vehicle, and a storage medium to solve the problem of the safety risk of the intelligent driving system in the prior art.

To solve the above problem, the technical solutions of the embodiments of the present application are realized as follows:
In a first aspect, the embodiments of the present application provide a vehicle risk avoidance method, including:
   obtaining first motion state information of a target vehicle and obstacle information of a target obstacle at a plurality of consecutive moments; the obstacle information includes two or more of an obstacle type, an obstacle location, obstacle boundary information, and second motion state information;
   executing a risk assessment strategy corresponding to the obstacle type according to the first motion state information and the obstacle information corresponding to each moment, to determine a risk assessment result of whether the target vehicle collides with the target obstacle; and
   determining, if a plurality of risk assessment results corresponding to the plurality of moments satisfy a risk condition, a target risk assessment result from the plurality of risk assessment results, and generating a target security protection strategy corresponding to the target risk assessment result to avoid a collision risk.
In a second aspect, the embodiments of the present application provide a vehicle risk avoidance system, including an automatic driving main module, a general control module, a monitoring protection module, and an actuator, and the monitoring protection module includes an auxiliary perception module and a risk assessment and resolution module.

The automatic driving main module is configured to obtain first motion state information of a target vehicle at a plurality of consecutive moments and output to the general control module.

The general control module is configured to output the first motion state information to the monitoring protection module.

The auxiliary perception module is configured to obtain first motion state information of a target vehicle and obstacle information of a target obstacle at a plurality of consecutive moments, the obstacle information including two or more of an obstacle type, an obstacle location, obstacle boundary information, and second motion state information.

The risk assessment and resolution module is configured to execute a risk assessment strategy corresponding to the obstacle type according to the first motion state information and the obstacle information corresponding to each moment, to determine a risk assessment result of whether the target vehicle collides with the target obstacle; determine, if a plurality of risk assessment results corresponding to the plurality of moments satisfy a risk condition, a target risk assessment result from the plurality of risk assessment results, generate a target security protection strategy corresponding to the target risk assessment result, and output the target security protection strategy to an actuator to execute the target security protection strategy to avoid a collision risk.

In a third aspect, the embodiments of the present application provide a vehicle including a controller.

The controller is configured to implement the method described above to operate the vehicle.

In a fourth aspect, the embodiments of the present application provide a storage medium storing thereon one or more computer programs, the one or more computer programs being executable by one or more processors to implement some of or all the steps of the methods described above.

The embodiments of the present application provide a vehicle risk avoidance method and system, a vehicle, and a storage medium, and the method includes: obtaining first motion state information of a target vehicle and obstacle information of a target obstacle at a plurality of consecutive moments, the obstacle information including two or more of an obstacle type, an obstacle location, obstacle boundary information, and second motion state information; executing a risk assessment strategy corresponding to the obstacle type according to the first motion state information and the obstacle information corresponding to each moment, to determine a risk assessment result of whether the target vehicle collides with the target obstacle; and determining, if a plurality of risk assessment results corresponding to the plurality of moments satisfy a risk condition, a target risk assessment result from the plurality of risk assessment results, and generating a target security protection strategy corresponding to the target risk assessment result to avoid a collision risk. That is, the present application monitors motion state information about a target vehicle at each moment and obstacle information about a target obstacle in a current road scene in real-time, and judges a risk assessment result of whether a collision occurs between the target vehicle and the target obstacle through a risk assessment strategy corresponding to the obstacle type; further, if the risk assessment results corresponding to a plurality of successive moments satisfy a risk condition, determining a target risk result and generating a target security protection strategy corresponding to the target risk assessment result to enable the target vehicle to avoid the collision risk; thus, the safety of automatic driving of the vehicle is improved.

### Brief Description of the Drawings

The drawings, which are incorporated in and constitute a part of the specification, illustrate embodiments consistent with the present application and, together with the specification, serve to explain the technical solutions of the present application.
Fig. 1 is an alternative structural diagram of an automatic driving main system provided in the related art;
Fig. 2 is an alternative flowchart diagram of a vehicle risk avoidance method provided by an embodiment of the present application;
Fig. 3 is a diagram of a road scene on which a target vehicle is driving provided by an embodiment of the present application;
Fig. 4 is an alternative scenario diagram of a target vehicle colliding with other vehicles on a driving path provided by an embodiment of the present application;
Fig. 5 is an alternative diagram of a detection range of a lidar and forward millimeter-wave radar provided by an embodiment of the present application;
Fig. 6 is a diagram of generating a new planned path corresponding to a target risk assessment result provided by an embodiment of the present application;
Fig. 7 is an alternative flowchart diagram of a vehicle risk avoidance method provided by an embodiment of the present application;
Fig. 8 is an alternative flowchart diagram of a vehicle risk avoidance method provided by an embodiment of the present application;
Fig. 9 is an alternative scenario diagram for determining a collision angle provided by an embodiment of the present application;
Fig. 10 is an alternative flowchart diagram of a vehicle risk avoidance method provided by an embodiment of the present application;
Fig. 11 is an alternative flowchart diagram of a vehicle risk avoidance method provided by an embodiment of the present application;
Fig. 12 is an alternative flowchart diagram of a vehicle risk avoidance method provided by an embodiment of the present application;
Fig. 13 is an alternative flowchart diagram of a vehicle risk avoidance method provided by an embodiment of the present application;
Fig. 14 is a diagram of a collision risk location provided by an embodiment of the present application;
Fig. 15 is an alternative flowchart diagram of a vehicle risk avoidance method provided by an embodiment of the present application;
Fig. 16 is an alternative safety architecture diagram of a vehicle risk avoidance system provided by an embodiment of the present application;
Fig. 17 is a structural block diagram of an auxiliary perception module and a risk assessment and resolution module provided by an embodiment of the present application;
Fig. 18 is an alternative diagram of a vehicle risk avoidance process provided by an embodiment of the present application;
Fig. 19 is an alternative structural diagram of a vehicle risk avoidance system provided by an embodiment of the present application;
Fig. 20 is an alternative structural diagram of a vehicle risk avoidance system provided by an embodiment of the present application; and
Fig. 21 is a structural diagram of a vehicle provided by an embodiment of the present application.

### Detailed Description of the Embodiments

To make the objects, technical solutions, and advantages of the present application clearer, the technical solutions of the present application are described in further detail below with reference to the drawings and embodiments. The described embodiments should not be construed as limiting the present application, and all other embodiments obtained by a person skilled in the art without making any inventive effort fall within the scope of protection of the present application.

In the following description, reference is made to "some embodiments" which describe a subset of all possible embodiments, but it is understood that "some embodiments" may be the same subset or different subsets of all possible embodiments and may be combined with each other without conflict. References to the terms "first/second/third" are merely to distinguish between similar objects and do not denote a particular ordering of the objects, it is understood that "first/second/third" may be interchanged with a particular ordering or precedence that permitted to enable embodiments of the present application described herein to be practiced in an order other than that illustrated or described herein.

Unless defined otherwise, all technical and scientific terms used herein have the same meaning as commonly understood by the ordinarily skilled in the art to which the present application belongs. The terms used herein are for the purpose of describing the present application only and are not intended to limit the present application.

Referring to Fig. 2, Fig. 2 is an implementation flowchart diagram of a vehicle risk avoidance method provided by an embodiment of the present application, and the method can be executed by a controller of a vehicle, and the description will be made herein in conjunction with the steps shown in Fig. 2.

Step 101: Obtain first motion state information of a target vehicle and obstacle information of a target obstacle at a plurality of consecutive moments.

The obstacle information includes two or more of an obstacle type, an obstacle location, obstacle boundary information, and second motion state information.

In the embodiments of the present application, the plurality of consecutive moments may be the plurality of consecutive future moments after the current moment, and the plurality of consecutive future moments may be understood as determining a plurality of future moments according to a preset time interval and selecting at least two consecutive future moments from the plurality of future moments; the time interval herein maybe 0.01 second (s), 0.02 s, and the like, and of course, the time interval may also be any number from 0.1 to 0.4, and in this regard, the present application is not particularly limited. The plurality of moments may be 10, 20, and the like, or other numbers of moments, for which the present application is not specifically limited.

In the embodiments of the present application, the target vehicle may be an autonomous vehicle, and the type of the autonomous vehicle herein is not limited, such as the vehicle type, size, and brand.

In the embodiments of the present application, the first motion state information is data information correspondingly collected by the target vehicle at each moment in the current road scene, and the first motion state information includes a first planned path planned by an automatic driving main module in a vehicle risk avoidance system of the target vehicle, the speed, acceleration, heading angle, and vehicle boundary information about the target vehicle; of course, the first motion state information may also include an actuator state; the actuator state includes, but is not limited to, a braking force and a braking included angle, a vehicle motor torque and a click rotation speed, the rotation angle of a steering wheel, and the like.

Illustratively, referring to Fig. 3, the road scene includes but is not limited to, a scene of other vehicles overtaking when the target vehicle (such as a black vehicle) is running normally, a scene of other vehicles slowing down when the target vehicle changes lanes, and a scene of the target vehicle driving on curves or on and off ramps.

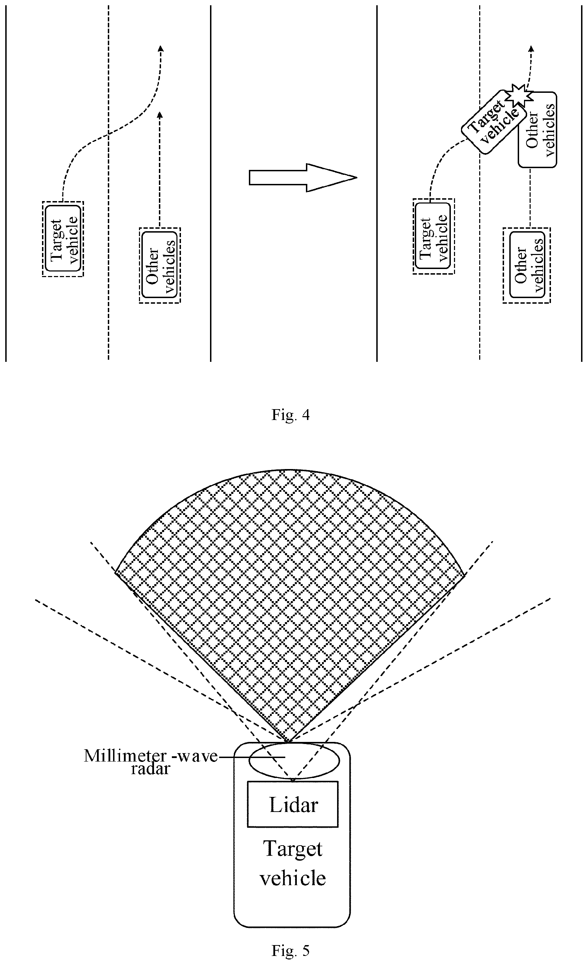

Referring to Fig. 4, in the perspective of a bird's eye view, the boundary information about the target vehicle and the boundary information about other vehicles can be considered as a rectangle, and the size of the rectangle is defined by the vehicle type and the safety boundary threshold together, namely, the vehicle size plus the vehicle safety threshold is the boundary information about the vehicle; referring to Table 1, illustratively, with the vehicle type being a lorry, the actual longitudinal length of the vehicle is 4.2 meters (m), the transverse width is 1.8 m, the safety threshold longitudinal length is 0.3 m, and the transverse width is 0.1 m, the preset longitudinal length of the vehicle is 4.5 m; the transverse width is 1.9 m, that is, the preset boundary information of the vehicle is 4.5 m×1.9 m.

**Table 1**

| **Vehicle type** | **Vehicle size** | **Safety threshold** |
|---|---|---|
| Car | Longitudinal length of about 5 m to 6 m, and transverse width of about 1.9 m | Longitudinal 0.3 m, transverse 0.1 m |
| Lorry | Longitudinal length of about 4.2 m, and transverse width of about 1.8 m | Longitudinal 0.3 m, transverse 0.1 m |
| Truck | Longitudinal length of about 6.8 m to 7.6 m, and transverse width of about 2.4 m | Longitudinal 0.8 m, transverse 0.2 m |
| Minibus | Longitudinal length of about 5.9 m, and transverse width of about 2 m | Longitudinal 0.3 m, transverse 0.1 m |
| Medium bus | Longitudinal length of about 8.6 m, and transverse width of about 2.3 m | Longitudinal 0.5 m, transverse 0.2 m |
| Large bus | Longitudinal length of about 10 m, and transverse width of about 2.5 m | Longitudinal 0.8 m, transverse 0.2 m |

In the embodiments of the present application, the target obstacle may be a stationary type obstacle, that is, a fixed target obstacle, such as a road edge, a guardrail on a road, a green belt, a building, and a traffic booth on a road; the target obstacle may also be a movable type obstacle, and the movable type obstacle may be an obstacle driving according to a preset planned path according to the passage of time, such as other vehicles driving on a road and pedestrians, and in this regard, the present application does not specifically define this. The target obstacle may be understood to be an obstacle driving along a preset planned path with the target vehicle.

In the embodiments of the present application, the obstacle information includes an obstacle type, and if the obstacle type of the target obstacle is a stationary obstacle type, the obstacle information may further include obstacle location and obstacle boundary information; if the obstacle type of the target obstacle is a movable obstacle type, the obstacle information may further include obstacle location, obstacle boundary information, and second motion state information.

The obstacle location herein may be positioned using the location-based services (LBS) function, may also be positioned using a global positioning system (GPS) module, and may also be positioned using base station positioning, which is not specifically limited here.

The second motion state information herein may include, but is not limited to, speed information, location information, and driving trajectory information about the obstacle, and the driving trajectory information may include information such as the movement direction of the obstacle and an offset distance between the obstacle and a center line of the lane and information such as a lane and an intersection where each obstacle is located may be acquired by combining the obstacle information and the map information.

In the embodiments of the present application, the obstacle information is the acquired obstacle area information about a target obstacle within a preset range in the driving direction of the target vehicle in the current road scene. The obstacle information within a preset range of a target vehicle can be collected and analyzed by an auxiliary perception module of a monitoring protection module in a vehicle risk avoidance system, and the surrounding environment can be sensed more accurately by one or more sensor devices such as a lidar, a camera, a millimeter-wave radar, a laser point cloud, and an ultrasonic radar, to provide a basis for determining path planning and driving control for avoiding risks. Illustratively, the auxiliary perception module employs a combination of lidar and a forward millimeter-wave radar, and perception detection ranges of the lidar and the forward millimeter-wave radar with respect to the surrounding environment are shown in Fig. 5; a lidar can achieve a detection range coverage of a forward horizontal field of view (FOV) of about 120 degrees (°) and about 150 m, and a forward millimeter-wave radar can achieve a detection range coverage of a forward horizontal FOV of about 150° and about 250 m.

The point cloud in the current road scene is accurately acquired through the lidar, and the obstacle information, such as the road boundary, the location, and the boundary of other vehicles, is obtained through algorithm identification; the speed, acceleration, and heading angle of other vehicles in the current road scene are measured accurately by millimeter-wave radar. Furthermore, the perception results of the lidar and the millimeter-wave radar at the same time are matched and aligned to obtain obstacle information about obstacles at the same time.

In the embodiments of the present application, the first motion state information about the target vehicle corresponding to each moment and the obstacle information about the target obstacle are obtained for a plurality of consecutive moments in the future, to obtain the first motion state information and the obstacle information corresponding to the plurality of moments.

Step 102: Execute a risk assessment strategy corresponding to the obstacle type according to the first motion state information and the obstacle information corresponding to each moment, to determine a risk assessment result of whether the target vehicle collides with the target obstacle.

In the embodiments of the present application, a risk assessment strategy is used to analyze the possibility of collision risk of a target vehicle in a current road scene according to the first motion state information and obstacle information. The risk assessment strategies include a risk assessment strategy corresponding to a stationary obstacle type, and a risk assessment strategy corresponding to a movable obstacle type.

In the embodiments of the present application, the risk assessment result includes the presence of a collision risk result and the absence of a collision risk result; and the presence of the collision risk result includes a risk level, a collision type, and a speed or a relative speed between the target vehicle and the target obstacle, and different risk levels correspond to different collision severities; the collision type is a collision location determination, and the collision risk locations include but are not limited to a front collision of the host vehicle, a front side scratch of the host vehicle, a front left side collision of the host vehicle, a front right side collision of the host vehicle, a rear left side collision of the host vehicle, and a rear right side collision of the host vehicle; the collision severities are characterized by whether the vehicle attitude of the target vehicle is controllable and the magnitude of the collision energy; the calculation of the collision energy needs to consider one or more of the following factors: the mass, speed, acceleration, collision risk type, collision mass, collision profile, and the like of the target vehicle, although other factors may also be considered in the calculation of the collision energy, for which the present application is not specifically limited.

In the embodiments of the present application, after obtaining the first motion state information about the target vehicle and the obstacle information about the target obstacle at a plurality of successive moments, according to the first motion state information and the obstacle information corresponding to each moment, a risk assessment strategy corresponding to the obstacle type is executed, to determine a risk assessment result of the target vehicle colliding with the target obstacle, thereby obtaining a plurality of risk assessment results corresponding to a plurality of moments.

Step 103: Determine, if a plurality of risk assessment results corresponding to the plurality of moments satisfy a risk condition, a target risk assessment result from the plurality of risk assessment results, and generate a target security protection strategy corresponding to the target risk assessment result to avoid a collision risk.

In the embodiments of the present application, the plurality of risk assessment results satisfying the risk condition can be understood as that the plurality of risk assessment results includes at least two existing risk results. Illustratively, if a risk assessment result corresponding to the occurrence of three moments among five risk assessment results corresponding to five consecutive moments is selected as the existing risk result, it is determined that the five risk assessment results corresponding to the five moments satisfy the risk condition.

In the embodiments of the present application, the target risk assessment result is that the risk assessment result with the highest frequency in the plurality of risk assessment results is the target risk assessment result, or the risk assessment result with the highest risk level in the plurality of risk assessment results.

In the embodiments of the present application, a security protection strategy includes simple braking and steering, enabling an AEB function to brake, and generating a new planned path such as a second planned path, the present application is not particularly limited.

In the embodiments of the present application, the target vehicle executes a risk assessment strategy corresponding to an obstacle type according to the first motion state information and obstacle information corresponding to each moment, to determine a risk assessment result of the target vehicle colliding with the target obstacle, and if the risk assessment results corresponding to a plurality of moments satisfy a risk condition, the target vehicle determines a target risk assessment result from the plurality of risk assessment results. Further, the target vehicle generates a target security protection strategy corresponding to the target risk assessment result based on the first motion state information and the obstacle location, the obstacle boundary information, and/or the second motion state information of the target obstacle so that the vehicle avoids the collision risk.

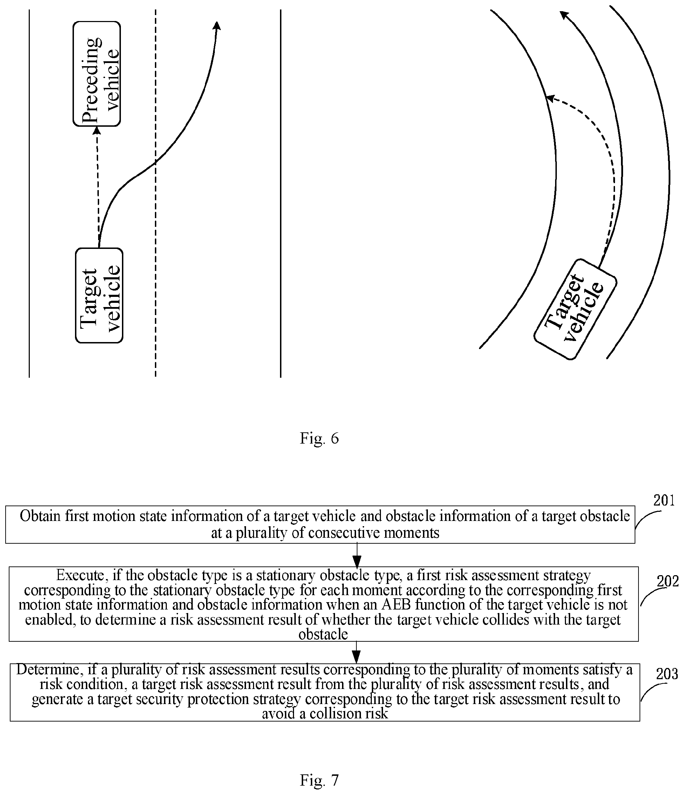

In an implementable application scenario, referring to Fig. 6, Fig. 6 shows a diagram of generating a new planned path corresponding to the target risk assessment result; the dashed line represents the path planned by the automatic driving main module of the target vehicle according to which the target vehicle would have a collision risk, and the solid line represents the generated new path according to which the target vehicle would avoid collision.

The embodiments of the present application provide a vehicle risk avoidance method, and the method includes: obtaining first motion state information of a target vehicle and obstacle information of a target obstacle at a plurality of consecutive moments, the obstacle information including two or more of an obstacle type, an obstacle location, obstacle boundary information, and second motion state information; executing a risk assessment strategy corresponding to the obstacle type according to the first motion state information and the obstacle information corresponding to each moment, to determine a risk assessment result of whether the target vehicle collides with the target obstacle; and determining, if a plurality of risk assessment results corresponding to the plurality of moments satisfy a risk condition, a target risk assessment result from the plurality of risk assessment results, and generating a target security protection strategy corresponding to the target risk assessment result to avoid a collision risk. That is, the present application monitors motion state information about a target vehicle at each moment and obstacle information about a target obstacle in a current road scene in real-time, and judges a risk assessment result of whether a collision occurs between the target vehicle and the target obstacle through a risk assessment strategy corresponding to the obstacle type; further, if the risk assessment results corresponding to a plurality of successive moments satisfy a risk condition, determining a target risk result and generating a target security protection strategy corresponding to the target risk assessment result to enable the target vehicle to avoid the collision risk; thus, the safety of automatic driving of the vehicle is improved.

Referring to Fig. 7, Fig. 7 is an implementation flowchart diagram of a vehicle risk avoidance method provided by an embodiment of the present application, and the method can be executed by a controller of a vehicle, and the description will be made herein in conjunction with the steps shown in Fig. 7.

Step 201: Obtain first motion state information of a target vehicle and obstacle information of a target obstacle at a plurality of consecutive moments.

The obstacle information includes two or more of an obstacle type, an obstacle location, obstacle boundary information, and second motion state information.

Step 202: Execute, if the obstacle type is a stationary obstacle type, a first risk assessment strategy corresponding to the stationary obstacle type for each moment according to the corresponding first motion state information and obstacle information when an AEB function of the target vehicle is not enabled, to determine a risk assessment result of whether the target vehicle collides with the target obstacle.

In the embodiments of the present application, the role of the AEB function is to use a radar to measure a distance to a vehicle in front or an obstacle, and then use a data analysis module to compare the measured distance with a warning distance and a safety distance, and when the distance is less than the warning distance, a warning prompt is performed; and when the distance is less than the safety distance, even in the case where the driver does not have access to step on a brake pedal if the AEB function is not enabled, the AEB function is enabled at this moment to automatically brake the vehicle to guarantee driving for a safe trip.

It should be noted that the determination of the risk assessment strategy corresponding to the obstacle type of the target obstacle for the target vehicle in the embodiments of the present application is performed only if the AEB function of the target vehicle is not enabled. If the AEB function of the target vehicle is enabled, the AEB strategy is executed at the same time as other planning strategies, such as steering and a new planned path, in case of a possible collision risk, so that the target vehicle drifts, resulting in a more serious collision risk of the target vehicle.

In the embodiments of the present application, the first risk assessment strategy is a risk assessment strategy corresponding to a stationary obstacle type.

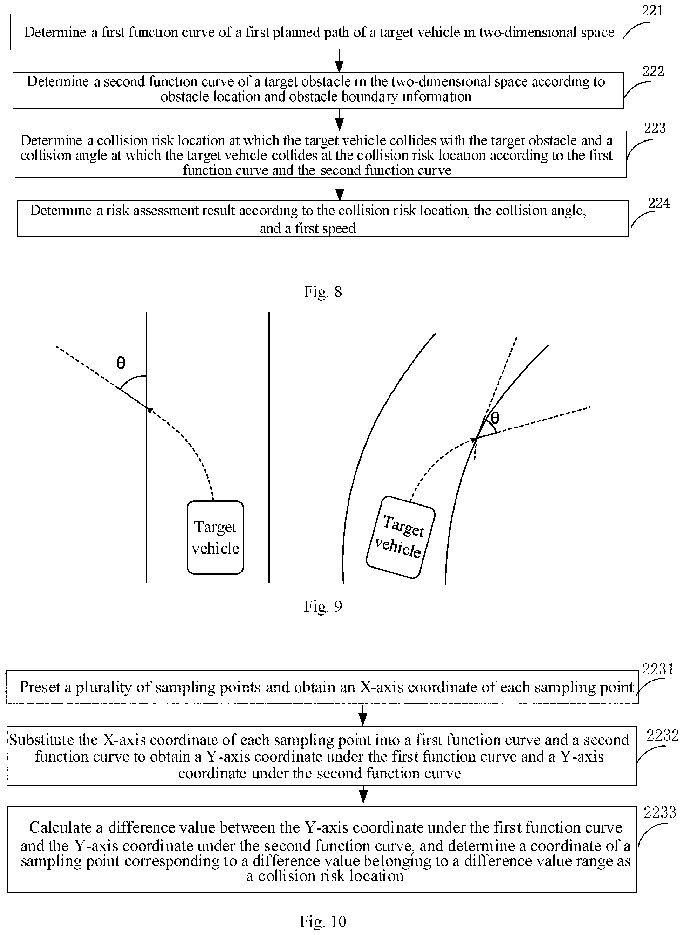

In the embodiments of the present application, the first risk assessment strategy is described in conjunction with the steps shown in Fig. 8.

Step 221: Determine a first function curve of a first planned path of the target vehicle in two-dimensional space.

In the embodiments of the present application, the two-dimensional space may be a rectangular coordinate system established with the center of the rear axis of the vehicle as the origin, the driving direction of the vehicle as the X-axis, and the direction perpendicular to the driving direction to the left as the Y-axis.

In the embodiments of the present application, the first planned path is a driving path that the target vehicle autonomously plans during automatic driving, and drives according to the driving path.

Step 222: Determine a second function curve of the target obstacle in the two-dimensional space according to the obstacle location and the obstacle boundary information.

In the embodiments of the present application, when the obstacle type is a stationary obstacle type, the obstacle boundary information is fixed, for example, if the target obstacle is a road edge, the target vehicle can obtain the location of the road edge, and the road edge boundary information, and then a second function curve of the road edge is fitted in a two-dimensional space according to the location of the road edge and the obstacle information.

Step 223: Determine a collision risk location at which the target vehicle collides with the target obstacle and a collision angle at which the target vehicle collides at the collision risk location according to the first function curve and the second function curve.

In the embodiments of the present application, the collision risk location is a location where there is an intersection between the first function curve and the second function curve, and the collision risk location includes but is not limited to a front collision of the host vehicle, a front side scratch of the host vehicle, a front left side collision of the host vehicle, a front right side collision of the host vehicle, a rear left side collision of the host vehicle, and a rear right side collision of the host vehicle.

In the embodiments of the present application, since the target obstacle is a stationary type obstacle, the collision angle may be determined based on the tangent of the first planned path of the target vehicle, the heading angle, and the collision risk location of the target obstacle. Illustratively, referring to Fig. 9, taking a target obstacle as a guardrail/road edge as an example, when the guardrail/road edge is a straight line, the collision risk location is an intersection of a first function curve fitted with the first planned trajectory of the target vehicle and a second function curve fitted with the straight line of the road edge, and the collision angle θ is an angle formed between a tangent line of the second function curve at the collision risk location and the planned trajectory of the target vehicle. For example, when the guardrail/road edge is a straight line, the collision angle is the angle between the first planned trajectory of the vehicle and the straight line of the guardrail/road edge at the collision risk location, and when the guardrail/road edge is a curved line, the collision angle is the angle between the first planned trajectory of the target vehicle and the tangent of the guardrail/road edge at the collision risk location.

In the embodiments of the present application, the process of determining a collision risk location at which the target vehicle collides with the target obstacle according to the first function curve and the second function curve in step 223 will be described with reference to Fig. 10.

Step 2231: Preset a plurality of sampling points and obtain an X-axis coordinate of each sampling point.

Step 2232: Substitute the X-axis coordinate of each sampling point into the first function curve and the second function curve to obtain a Y-axis coordinate under the first function curve and a Y-axis coordinate under the second function curve.

Step 2233: Calculate a difference value between the Y-axis coordinate under the first function curve and the Y-axis coordinate under the second function curve, and determine a coordinate of a sampling point corresponding to a difference value belonging to a difference value range as the collision risk location.

In the embodiments of the present application, the plurality of sampling points are determined based on the speed of the target vehicle, and the plurality of sampling points are set at sampling points within a preset distance when the target vehicle drives along the first planned path over time, the preset distance being the distance between the target vehicle and the target obstacle.

In the embodiments of the present application, the difference value range may be a range of distances over which collisions may occur, as calibrated from practical experience.

In the embodiments of the present application, a target vehicle presets a plurality of sampling points within a certain distance according to a driving direction, acquires an X-axis coordinate of each sampling point, and then substitutes the X-axis coordinate of each sampling point into the first function curve and the second function curve to obtain the Y-axis coordinate under the first function curve and the Y-axis coordinate under the second function curve; further, the target vehicle calculates a difference value between the Y-axis coordinate under the first function curve and the Y-axis coordinate under the second function curve, determines whether the difference value falls within a difference value range, and if the difference value falls within the difference value range, determines the coordinate of the sampling point corresponding to the difference value falling within the difference value range as the collision risk location.

In an implementable scenario, a target vehicle is divided into N sampling points at a certain distance δ (according to a vehicle speed look-up table) along the X-axis direction from the origin of coordinates, the X coordinate of each sampling point is substituted into a first function curve and a second function curve of the target vehicle, the Y coordinate corresponding to the X coordinate on the first function curve and the Y coordinate corresponding to the X coordinate on the second function are calculated, and the difference between the two Y coordinates is used to judge whether the absolute value of the result is less than Δd_1 (calibratable), and if the absolute value of the difference between the Y coordinates of a certain sampling point is less than Δd_1, it is considered that there is a potential collision risk; the collision risk locations are recorded as X coordinate and Y coordinate.

Step 224: Determine the risk assessment result according to the collision risk location, the collision angle, and a first speed.

The first motion state information includes a first planned path and a first speed.

In the embodiments of the present application, the first speed is the speed of the target vehicle.

In the embodiments of the present application, the risk assessment result may be determined based on the collision risk location, the collision angle, and the driving speed of the target vehicle at the current time, that is, the first speed.

In the embodiments of the present application, the determining the risk assessment result according to the collision risk location, the collision angle, and a first speed in step 224 may be achieved by the following process:
determining a collision type according to the collision angle and the collision risk location; pre-establishing a first mapping relationship table among the collision type, speed, and risk level; and finding a target risk level corresponding to the collision type and the first speed in the first mapping relationship table, the risk assessment result including the collision type and the target risk level.

In the embodiments of the present application, the collision type is determined by the collision angle and the collision risk location together, and the collision type includes but is not limited to, a front side scratch, a front side collision, and a frontal collision. For example, if the collision angle is less than a first preset angle, such as 30°, and the collision risk location is the front side of the vehicle, the collision type is front side scratch; if the collision angle is greater than the first preset angle and less than a second preset angle, such as 75°, and the collision risk location is the vehicle front side, the collision type is front side collision; if the collision angle is greater than the second preset angle and less than a third preset angle, such as 90°, and the collision risk location is the front of the vehicle, the collision type is frontal collision.

In the embodiments of the present application, the first mapping relationship table is determined by the collision type, the speed of the target vehicle, and the risk level. The risk level includes four risk levels S1, S2, S3, and S4, and the four risk levels are ranked according to the severity; the risk level S1 is the minimum collision severity and the risk level S4 is the maximum collision severity. Illustratively, the first mapping relationship table is shown in Table 2.

**Table 2**

| | Collision type | | |
|---|---|---|---|
| Speed (km/h) | Front side scratch | Front side collision | Frontal collision |
| 0 to 20 | S1 | S2 | S1 |
| 20 to 40 | S2 | S3 | S2 |
| 40 to 60 | S3 | S4 | S3 |

In the embodiments of the present application, after determining a collision type according to the collision angle and the collision risk location, the target vehicle looks up the target risk level corresponding to the collision type and the first speed in the first mapping relationship table to obtain the risk assessment result.

Step 203: Determine, if a plurality of risk assessment results corresponding to the plurality of moments satisfy a risk condition, a target risk assessment result from the plurality of risk assessment results, and generate a target security protection strategy corresponding to the target risk assessment result to avoid a collision risk.

It can be seen from the above that the present application monitors motion state information about a target vehicle at each moment and obstacle information about a target obstacle in a current road scene in real-time, and judges a risk assessment result of whether a collision occurs between the target vehicle and the target obstacle through a first risk assessment strategy corresponding to the stationary obstacle type; further, if the risk assessment results corresponding to a plurality of successive moments satisfy a risk condition, determining a target risk result and generating a target security protection strategy corresponding to the target risk assessment result to enable the target vehicle to avoid the collision risk; thus, the safety of automatic driving of the vehicle is improved.

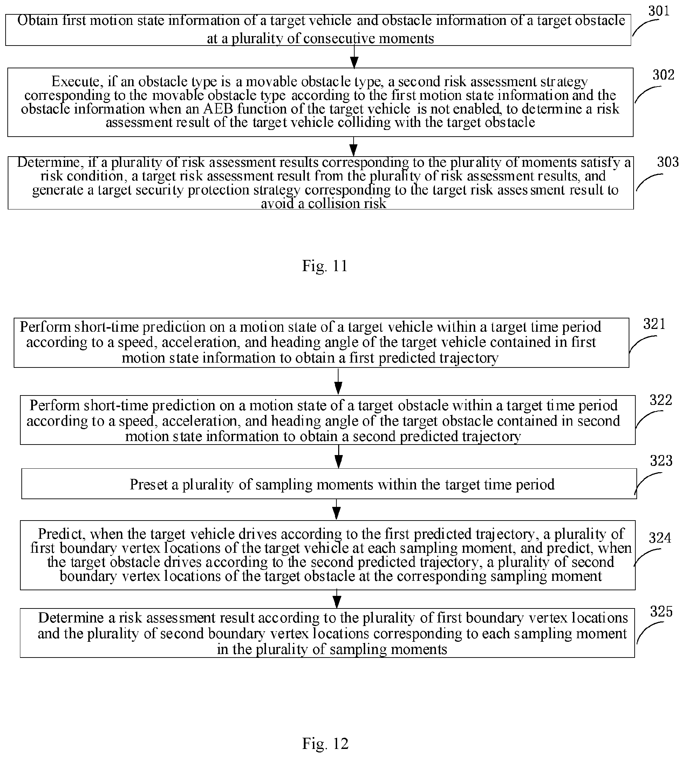

Referring to Fig. 11, Fig. 11 is an implementation flowchart diagram of a vehicle risk avoidance method provided by an embodiment of the present application, and the method can be executed by a controller of a vehicle, and the description will be made herein in conjunction with the steps shown in Fig. 11.

Step 301: Obtain first motion state information of a target vehicle and obstacle information of a target obstacle at a plurality of consecutive moments.

The obstacle information includes two or more of an obstacle type, an obstacle location, obstacle boundary information, and second motion state information.

Step 302: Execute, if the obstacle type is a movable obstacle type, a second risk assessment strategy corresponding to the movable obstacle type according to the first motion state information and the obstacle information when the AEB function of the target vehicle is not enabled, to determine a risk assessment result of the target vehicle colliding with the target obstacle.

In the embodiments of the present application, the second risk assessment strategy is a risk assessment strategy corresponding to the movable obstacle type.

In the embodiments of the present application, the role of the AEB function is to use a radar to measure a distance to a vehicle in front or an obstacle, and then use a data analysis module to compare the measured distance with a warning distance and a safety distance, and when the distance is less than the warning distance, a warning prompt is performed; and when the distance is less than the safety distance, even in the case where the driver does not have access to step on a brake pedal if the AEB function is not enabled, the AEB function is enabled at this moment to automatically brake the vehicle to guarantee driving for safe trip.

It should be noted that the determination of the risk assessment strategy corresponding to the obstacle type of the target obstacle for the target vehicle in the embodiments of the present application is performed only if the AEB function of the target vehicle is not enabled. If the AEB function of the target vehicle is enabled, the AEB strategy is executed at the same time as other planning strategies, such as steering and a new planned path, in case of a possible collision risk, so that the target vehicle drifts, resulting in a more serious collision risk of the target vehicle.

In the embodiments of the present application, the second risk assessment strategy is described in conjunction with the steps shown in Fig. 12.

Step 321: Perform short-time prediction on a motion state of the target vehicle within a target time period according to the speed, acceleration, and heading angle of the target vehicle contained in the first motion state information to obtain a first predicted trajectory.

Step 322: Perform short-time prediction on a motion state of the target obstacle within the target time period according to the speed, acceleration, and heading angle of the target obstacle contained in the second motion state information to obtain a second predicted trajectory.

In the embodiments of the present application, according to the speed, acceleration, and heading angle, the target vehicle performs short-time prediction on the motion state of the target vehicle in the target time period via the vehicle dynamics model to obtain a first predicted trajectory, and according to the speed, acceleration, and heading angle of the target obstacle, performs short-time prediction on the motion state of the target obstacle in the target time period via the vehicle dynamics model to obtain a second predicted trajectory.

In an implementable application scenario, the target vehicle performs short-time prediction on the motion state of the target vehicle based on the vehicle dynamics model according to the speed, acceleration, and heading angle to obtain the first predicted trajectory S1 of the host vehicle in the target time period; according to the speed, acceleration, and heading angle of the other vehicle, the target vehicle performs short-time prediction on the motion state of the other target vehicle based on the vehicle dynamics model to obtain a second predicted trajectory S2 of the other target vehicle in the target time period; the predicted target time period, that is, the time window, is calibratable for at least 1 s.

Step 323: Preset a plurality of sampling moments within the target time period.

Step 324: Predict, when the target vehicle drives according to the first predicted trajectory, a plurality of first boundary vertex locations of the target vehicle at each sampling moment, and predict, when the target obstacle drives according to the second predicted trajectory, a plurality of second boundary vertex locations of the target obstacle at the corresponding sampling moment.

In the embodiments of the present application, the boundary vertex locations can be understood as the locations of each vertex in the boundary information when the vehicle is regarded as a rectangle, and the vehicle includes four boundary vertex locations at each sampling moment.

Step 325: Determine the risk assessment result according to the plurality of first boundary vertex locations and the plurality of second boundary vertex locations corresponding to each sampling moment in the plurality of sampling moments.

In the embodiments of the present application, when a plurality of sampling moments are preset in the target time period, four first boundary vertex locations of the target vehicle at each sampling moment are predicted when the target vehicle drives according to the first predicted trajectory, and four second boundary vertex locations of the target obstacle at corresponding sampling moments are predicted when the target obstacle drives according to the second predicted trajectory, thereby obtaining four first boundary vertex locations and four second boundary vertex locations corresponding to each sampling moment in the plurality of sampling moments; further, a risk assessment result of a collision between the target vehicle and the target obstacle is determined based on four first boundary vertex locations and four second boundary vertex locations corresponding to each sampling moment in the plurality of sampling moments.

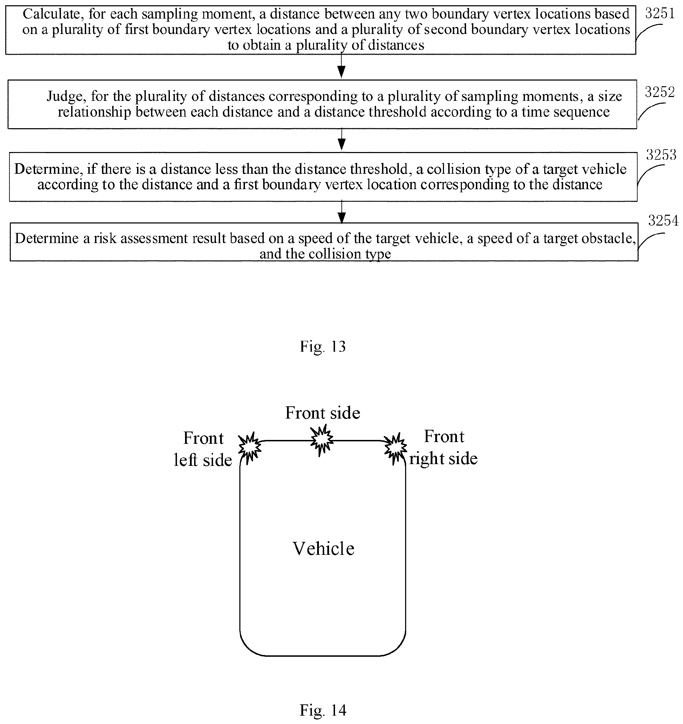

In some embodiments, the process of determining the risk assessment result according to the plurality of first boundary vertex locations and the plurality of second boundary vertex locations corresponding to each sampling moment in the plurality of sampling moments in step 325 is described in conjunction with Fig. 13.

Step 3251: Calculate, for each sampling moment, a distance between any two boundary vertex locations based on the plurality of first boundary vertex locations and the plurality of second boundary vertex locations to obtain a plurality of distances.

Step 3252: Judge, for the plurality of distances corresponding to the plurality of sampling moments, a size relationship between each distance and a distance threshold according to a time sequence.

Step 3253: Determine, if there is a distance less than the distance threshold, a collision type of the target vehicle according to the distance and a first boundary vertex location corresponding to the distance.

Step 3254: Determine the risk assessment result based on the speed of the target vehicle, the speed of the target obstacle, and the collision type.

In the embodiments of the present application, first, for each sampling moment, the target vehicle calculates a distance between any two boundary vertex locations based on the four first boundary vertex locations of the target vehicle and the four second boundary vertex locations of the target obstacle to obtain a plurality of distances; then, for a plurality of distances corresponding to a plurality of sampling moments, the target vehicle sequentially judges the size relationship between each distance and the distance threshold in a time sequence; as long as there is a distance less than a distance threshold, determining a first boundary vertex location corresponding to the distance, and determining a collision type of the target vehicle based on the distance and the first boundary location corresponding to the distance; finally, the risk assessment result of the collision between the target vehicle and the target obstacle is determined based on the speed of the target vehicle, the speed of the target obstacle, and the collision type.

In some embodiments, the judging, for the plurality of distances corresponding to the plurality of sampling moments, a size relationship between each distance and a distance threshold according to a time sequence in step 3252 can also be achieved by the following process:
determining, for a plurality of distances corresponding to each sampling moment in the plurality of sampling moments, a shortest distance among the plurality of distances as a distance between the target vehicle and the target obstacle at the sampling moment to obtain a plurality of distances corresponding to the plurality of sampling moments; sequentially judging a size relationship between each distance and a distance threshold according to a time sequence; that is, for each sampling moment, determining the shortest distance among a plurality of distances corresponding to each sampling moment as the distance between the target vehicle and the target obstacle to obtain a plurality of distances corresponding to the plurality of sampling moments, and then judging the size relationship between each distance and the distance threshold from different places according to a time sequence; thus, by screening out the shortest distance corresponding to each sampling moment, a large amount of data comparison is reduced, and the amount of calculation is reduced.

In an implementable application scenario, the distances between any two locations between four first boundary vertex locations of the target vehicle at each sampling moment and four second boundary vertex locations of the target obstacle, that is, the nearest other vehicles, are calculated in the target time period, that is, a total of 4 × 4 = 16 distances are calculated between the target vehicle and the nearest vehicle, the shortest distance k at each sampling moment is obtained from the 16 distances, and the first boundary vertex location and the second boundary vertex location corresponding to the shortest location are obtained, and the corresponding sampling moment is recorded. According to the time sequence, whether the shortest distance k is less than 0 is judged in turn. If there is a moment when k is less than 0, the risk assessment considers that there is a direct collision risk. If the shortest distance k is greater than 0, it is considered that there is no direct collision. A collision type of the target vehicle is judged according to a location where the shortest distance node is located; the collision type of the target vehicle includes, but is not limited to, a front side collision (also called a frontal collision), a front left side collision, and a front right side collision, illustratively, referring to Fig. 14.

In some embodiments, the determining the risk assessment result based on the speed of the target vehicle, the speed of the target obstacle, and the collision type in step 3254 may be accomplished through the following process:
determining a relative speed between the target vehicle and the target obstacle based on the speed of the target vehicle and the speed of the target obstacle; pre-establishing a second mapping relationship table among the collision type, the relative speed, and the risk assessment result; finding a target risk level corresponding to the collision type and the relative speed in the second mapping table, the risk assessment result including but is not limited to the collision type and the target risk level.

In the embodiments of the present application, the second mapping relationship table is determined by the collision type, the relative speed between the target vehicle and the target obstacle, and the risk level. The risk level includes four risk levels S1, S2, S3, and S4, and the four risk levels are ranked according to the severity; the risk level S1 is the minimum collision severity and the risk level S4 is the maximum collision severity. Illustratively, the second mapping relationship table is shown in Table 3.

**Table 3**

| | Collision type | | |
|---|---|---|---|
| Relative speed (km/h) | Front side scratch | Front side collision | Frontal collision |
| 0 to 20 | S1 | S2 | S1 |
| 20 to 40 | S2 | S3 | S2 |
| 40 to 60 | S3 | S4 | S3 |

In the embodiments of the present application, after determining the relative speed between the target vehicle and the target obstacle according to the speed of the target vehicle and the speed of the target obstacle, the target vehicle looks up the target risk level corresponding to the collision type and the relative speed in the second mapping relationship table to obtain the risk assessment result of the target vehicle.

Step 303: Determine, if a plurality of risk assessment results corresponding to the plurality of moments satisfy a risk condition, a target risk assessment result from the plurality of risk assessment results, and generate a target security protection strategy corresponding to the target risk assessment result.

It can be seen from the above that the present application monitors motion state information about a target vehicle at each moment and obstacle information about a target obstacle in a current road scene in real-time, and judges a risk assessment result of whether a collision occurs between the target vehicle and the target obstacle through a second risk assessment strategy corresponding to the movable obstacle type; further, if the risk assessment results corresponding to a plurality of successive moments satisfy a risk condition, determining a target risk result and generating a target security protection strategy corresponding to the target risk assessment result to enable the target vehicle to avoid the collision risk; thus, the safety of automatic driving of the vehicle is improved.

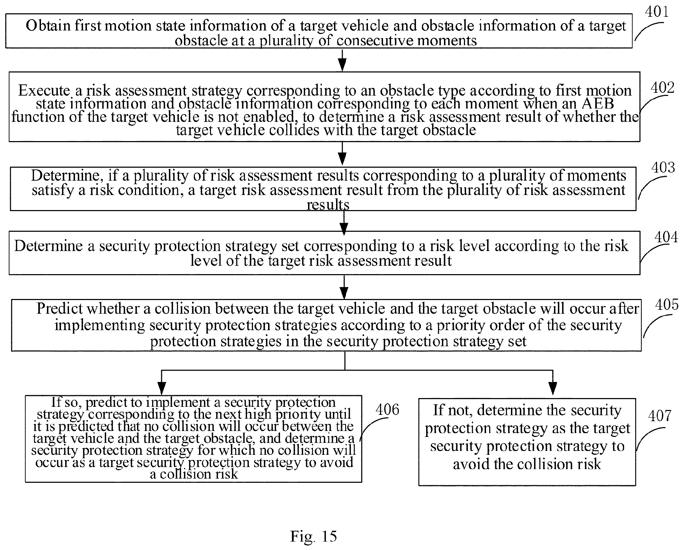

Referring to Fig. 15, Fig. 15 is an implementation flowchart diagram of a vehicle risk avoidance method provided by an embodiment of the present application, and the method can be executed by a controller of a vehicle, and the description will be made herein in conjunction with the steps shown in Fig. 15.

Step 401: Obtain first motion state information of a target vehicle and obstacle information of a target obstacle at a plurality of consecutive moments.

The obstacle information includes two or more of an obstacle type, an obstacle location, obstacle boundary information, and second motion state information.

Step 402: Execute a risk assessment strategy corresponding to the obstacle type according to the first motion state information and the obstacle information corresponding to each moment when an AEB function of the target vehicle is not enabled, to determine a risk assessment result of whether the target vehicle collides with the target obstacle.

Step 403: Determine, if a plurality of risk assessment results corresponding to the plurality of moments satisfy a risk condition, a target risk assessment result from the plurality of risk assessment results.

In the embodiments of the present application, the determining a target risk assessment result from the plurality of risk assessment results can be achieved in the following two ways:
Firstly, the risk assessment result with the highest frequency among the plurality of risk assessment results is determined as the target risk assessment result; secondly, the risk assessment result with the highest risk level among the plurality of risk assessment results is determined as the target risk assessment result.

In the embodiments of the present application, the determining the risk assessment result with the highest occurrence frequency as the target risk assessment result can be understood as that the probability of the target risk assessment result occurring in the road scene is relatively high, and to avoid a collision risk with a relatively high probability, it is determined as the target risk assessment result to reduce the probability of the collision risk occurring in the vehicle.

In the embodiments of the present application, the determining the risk assessment result with the highest risk level as the target risk assessment result can be understood as that the target risk assessment result occurs most seriously in the road scene, to avoid the occurrence of a relatively serious collision risk. It is determined as a target risk assessment result to reduce the loss when the vehicle is at collision risk.

Step 404: Determine a security protection strategy set corresponding to the risk level according to the risk level of the target risk assessment result.

In the embodiments of the present application, the security protection strategy set may include one or more security protection strategies, and the included plurality of security protection strategies have security protection priorities therebetween, for example, the security protection strategy set corresponding to the risk level includes one or more of a single security protection strategy for longitudinal control and/or a security protection strategy for combined transverse and longitudinal control; the single security protection strategy for longitudinal control includes, for example, simple braking and enabling an AEB function to perform braking; the security protection strategy for combined transverse and longitudinal control includes, for example, simple steering and generating a new planned path, that is, a second planned path.

In an implementable scenario, the generating a new planned path may be achieved by considering that the vehicle is driving on a structured road, the vehicle driving on the structured road is not allowed to reverse, and therefore the heading angle of the vehicle does not have an excessive included angle with the lane center line. The planning problem is to establish a constrained cost function, and the solution to the problem is obtained by finding the extreme value of the function. The steps are as follows: obtaining a road edge and fitting a road center line as a guideline of a vehicle, and fitting a cubic curve equation of the guideline in the Cartesian coordinates; performing Frenet coordinate system conversion according to the guideline, and converting geometric information about a road boundary and other target vehicles into Frenet coordinates; and generating a new planned path, namely, a second planned path, according to Frenet coordinates. Note that the first planned path considers the smoothness, safety, and comfort of the path trajectory, and the second planned path only considers the safety of the path trajectory.

Step 405: Predict whether a collision between the target vehicle and the target obstacle will occur after implementing security protection strategies according to a priority order of the security protection strategies in the security protection strategy set.

Step 406: If so, predict to implement a security protection strategy corresponding to the next high priority until it is predicted that no collision will occur between the target vehicle and the target obstacle, and determine the security protection strategy for which no collision will occur as the target security protection strategy to avoid the collision risk.

Step 407: If not, determine the security protection strategy as the target security protection strategy to avoid the collision risk.

In the embodiments of the present application, after determining a target risk assessment result from a plurality of risk assessment results, the target vehicle determines a security protection strategy set corresponding to the risk level according to the risk level of the target risk assessment result, and predicts whether a collision will occur between the target vehicle and the target obstacle after the security protection strategy is implemented according to the priority order of the safety protection strategies in the security protection strategy set; if it is determined that a collision will still occur, predicting to implement the security protection strategy corresponding to the next high priority until it is predicted that no collision will occur between the target vehicle and the target obstacle, and determining the security protection strategy which will not occur a collision as the target security protection strategy to avoid the collision risk; of course, if it is determined that a collision does not occur, the security protection strategy is determined as the target security protection strategy to avoid the collision risk.

In other embodiments of the present application, during the execution of the target safety and protection strategy corresponding to the target risk assessment result, the target vehicle may also obtain a further risk assessment result of whether the target vehicle collides with the target obstacle in real time; since the target vehicle is executing the target safety and protection strategy, the collision level of the collision between the target vehicle and the target obstacle is reduced, namely, the further risk assessment result is different from the above target risk assessment result, and the collision level included in the further risk assessment result is less than the collision level included in the target risk assessment result; at this time, a further security protection strategy corresponding to the further risk assessment result is generated, and the target vehicle is caused to update the target security protection strategy into the further security protection strategy to avoid the collision risk. In this way, in the process of executing the target security protection strategy corresponding to the target risk assessment result, the target vehicle can also determine in real-time whether there will be a collision between the target vehicle and the obstacle and the collision level; if the collision level decreases, the target vehicle can generate the security protection strategy with a low priority corresponding to the collision level and execute the security protection strategy, to realize the real-time update of the security protection strategy, thereby using the real-time updated security protection strategy to avoid the collision risk and avoid the collision, improving the intelligence of the vehicle and improving the safety of the vehicle.

In an implementable application scenario, if the risk level in the risk assessment result is S 1, an exploratory action such as a single longitudinal control such as light or simple braking or enabling AEB or simple steering is performed, the deceleration at simple braking being less than 6 meters per square second (m/s²), and the deceleration at AEB braking being greater than 6 m/s²; the target vehicle herein predicts whether or not the target vehicle collides with the preceding vehicle according to the light brake, and if the target vehicle does not collide, the target vehicle is braked at the deceleration of the simple brake, and if the target vehicle collides, the target vehicle is braked at the deceleration of the AEB. If the risk assessment result is S2 or S3, the security protection strategy can be simple steering, enabling AEB, or generating a new planned path. According to the risk level, collision type, current vehicle attitude, location of the target obstacle, the distance between the target obstacle, and the like, the driving path to be avoided is planned, that is, the security protection strategy.

To better understand the present application, the technical solutions of the above embodiments of the present application are further explained in detail in combination with a specific application example.

With the development of AI technology, intelligent driving has made great progress, from the early ACC, and AEB to the current high-speed/urban NOA. The increasingly powerful functions are accompanied by the expansion of application scenarios, and at the same time, the safety problems of expected functions caused by the insufficient performance of the intelligent driving system itself and the misuse of the intelligent driving functions by drivers are gradually emerging. For example, Tesla turns on Autopilot to hit a white truck overturning on the road, and Uber's self-driving test vehicle hit a bicycle that crossed the road. Studies have estimated that autonomous vehicles need to test at least 440 million kilometers to demonstrate performance better than 95% of human drivers, which is equivalent to a mileage of 100 vehicles running 12.5 years without interruption in 24 hours. It is unacceptable to both vehicle companies and automatic drive development companies.

As stated in the present application CN112612288A, the current idea of the expected functional safety problem in the industry at present still follows the functional safety methodology applicable to the traditional electric control system, namely, for a logically clear and regular system, all the problems can be solved rounds of tests in the development stage, and such system will not be basically updated in the subsequent stage of being put on the market. However, as an important application of AI technology in the current software 2.0 era, intelligent driving is a system with ambiguous interpretability and rapid update iteration. The performance of its perception and decision-making planning subsystem depends on the continuous training and optimization of massive data, and this process should not be limited to the development stage, but also be implemented in the use stage. On the other hand, according to the workflow in the expected functional safety standard ISO 21448, the expected functional safety development needs to first carry out hazard identification and risk assessment at different functional levels, analyze the potential trigger scenarios corresponding to the risks, test the trigger scenarios, and optimize the automatic driving system performance of the vehicle according to the test results. It is obvious that there is a typical long tail effect in this process, and a few dangerous scenarios may need hundreds of millions of kilometers of tested vehicles to meet once, so it is unrealistic for engineering personnel to fully summarize all dangerous triggering scenarios in the development process and improve the safety of expected functions. In addition, in the automatic driving system of the L3 level, the system needs to detect the failure of the automatic driving main system in time and notify the driver to take over, performing a degraded driving task before the driver takes over. This indicates that vehicles need to be equipped with redundant safety subsystems to monitor and control the vehicle in addition to the automatic driving main system. In summary, in the intelligent driving system, independent real-time dynamic monitoring is performed on the intelligent driving behavior under the current situation, the expected functional safety risk is evaluated, and corresponding measures are taken according to the result of risk evaluation, which is very necessary for improving the overall safety of the intelligent driving system.

A typical automatic driving main system is shown in Fig. 1, including a perception module, a decision module, a planning module, and a control module.

To solve the expected functional safety problem of the L3-level intelligent driving system and meet the requirements of the minimum redundant safety system, an independent intelligent driving behavior real-time dynamic monitoring and expected functional safety risk protection system (referred to as a monitoring protection system for short) is designed based on the system. At present, the operating design domain of the monitoring protection system considers highways and takes the traffic jam pilot (TJP) function with a vehicle speed below 60 km/h as an example, a scene of other vehicles overtaking when the host vehicle is running normally, a scene of other vehicles slowing down when the host vehicle changes lanes, and a scene of the host vehicle driving on curves or on and off ramps, to solve the risk of a collision in the forward direction and the forward side direction.

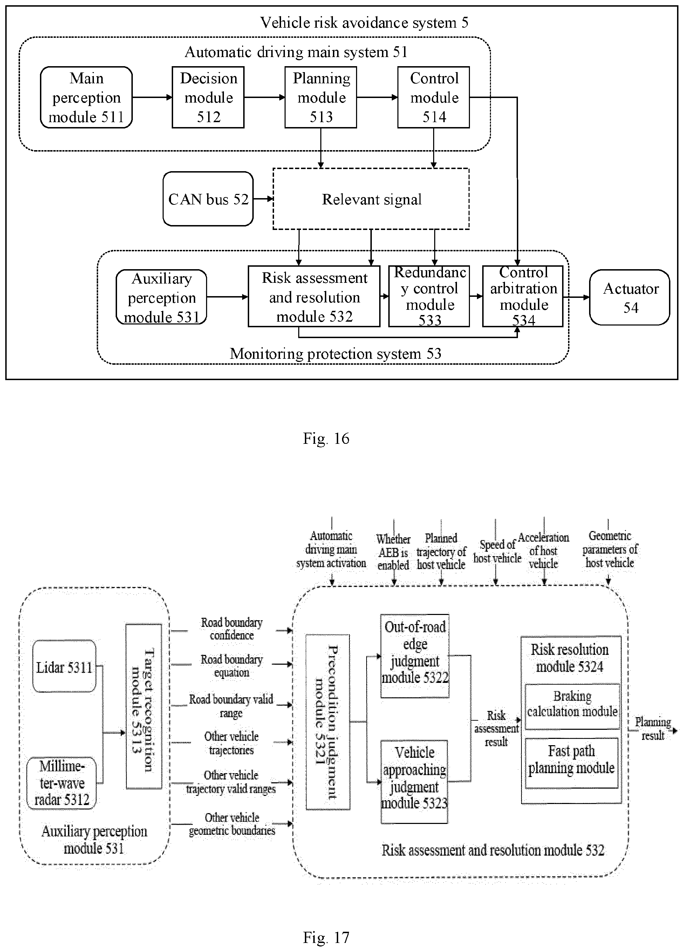

Referring to Fig. 16, Fig. 16 is a safety architecture diagram of a vehicle risk avoidance system provided by an embodiment of the present application; the vehicle risk avoidance system 5 includes an automatic driving main system 51, a controller area network (CAN) bus 52, a monitoring protection system 53, and an actuator 54; the automatic driving main system 51 is the same as an automatic driving main system in the related art, and the automatic driving main system 51 is configured to make a decision and plan a planned path or a driving trajectory (corresponding to the above first planned path) through a decision module 512 and a planning module 513, based on the information about a current road scene of a host vehicle sensed by a main perception module 511; a control module 514 obtains a relevant signal of the host vehicle, generates a control command according to the planned path, and sends the relevant signal and the planned path to a monitoring protection system 53 via the CAN bus 52; and the monitoring protection system sends the output control command to the actuator 54, so that the actuator 54 executes the control command.

According to the ISO 26262 standard, the minimum redundant safety system for automatic driving above the L3 level needs to meet the independence requirement, which includes the following two aspects to achieve this goal: Firstly, the monitoring protection system additionally designs an auxiliary perception module as an independent safe and reliable data source, namely, the auxiliary perception module 531 in the monitoring protection system 53 is different from the main perception module 511 in the automatic driving main system 51. Secondly, independent operation modules are adopted to process such tasks as auxiliary perception module 531, risk assessment and resolution module 532, redundancy control module 533, and control arbitration module 534.

The monitoring protection system 53 acquires relevant signals of the automatic driving main system 51 via the vehicle CAN bus 52; the relevant signals include but are not limited to a planning signal, a control signal, an automatic driving main system activation signal, and whether the AEB is enabled, and analyses and processes same to obtain information such as a current speed and acceleration of the host vehicle (equivalent to the above target vehicle), a planned path or trajectory of the automatic driving main system 51 and the actuator state; the actuator state includes a braking force and a braking included angle, a current vehicle speed, a torque and a rotation speed of a motor, and a rotation angle of a steering wheel.

The auxiliary perception module 531 performs recognition processing on the data of the auxiliary perception to obtain information such as a vehicle, a pedestrian, an obstacle, and a road boundary of the current scene.

Referring to Fig. 17, the hardware of the auxiliary perception module 531 employs a combination of a lidar 5311 and a forward millimeter-wave radar 5312, in which the lidar 5311 can achieve a detection range coverage of a forward horizontal FOV of about 120° and about 150 m. The forward millimeter-wave radar 5312 can achieve a detection range coverage of a forward horizontal FOV of about 150° and about 250 m. The auxiliary perception module 531 also includes a perception cognition module 5313; the perception cognition module 5313 accurately acquires point cloud data of a road and a vehicle corresponding to different moments in the current road scene via the lidar 5311, and identifies and obtains the road boundary and the location and boundary of other vehicles based on the point cloud data; the determined road boundary is a road boundary for which a road boundary confidence meets a confidence condition, and the road boundary includes a road boundary equation and a road boundary valid range. The speed, acceleration, and heading angle of other vehicles in the current road scene are accurately measured by the millimeter-wave radar 5312. Through the target recognition module 5313 fusing the perception results of the lidar and the millimeter-wave radar, the relevant information about the other vehicles is matched and aligned, and the trajectories of the other vehicles, the valid range of the trajectories of the other vehicles, and the geometric boundaries of the other vehicles, which are also called geometric parameters, are determined according to the matched information.

The target recognition module 5313 can also perform short-time prediction on the motion state of the host vehicle in the time window T via a vehicle dynamics model according to the speed, acceleration, and heading angle of the host vehicle to obtain a first predicted trajectory S1 of the host vehicle in the time window T; likewise, according to the speed, acceleration, and heading angle of the other vehicle, the motion state of the other vehicle in the time window T is performed with short-time prediction via the vehicle dynamics model, and a second predicted trajectory S2 of the other vehicle in the time window T is obtained; the predicted time window can be calibratable for at least 1 s. Of course, the target recognition module 5313 may also determine a road boundary equation, a road boundary confidence, a road boundary valid range, other vehicle trajectories, other vehicle trajectory valid ranges, and other vehicle geometric boundaries according to the data information collected by the lidar and the millimeter-wave radar, for which the present application is not particularly limited.

Further, referring to Fig. 16, relevant signals of the host vehicle's automatic driving main system are acquired via the host vehicle's CAN bus 52; the relevant signals include but are not limited to, a path planning signal, a speed planning signal, a host vehicle's speed at the current moment, an acceleration, heading angle signals, an automatic driving main system activation signal, whether AEB is enabled, and an actuator status signal.

The risk assessment and resolution module 532 performs interactive prediction on the vehicles and pedestrians under the current road scene and carries out driving safety risk assessment and quantitative by combining the motion state information of the host vehicle and the output trajectory of the automatic driving main system, to judge whether the behavior of the host vehicle collides with other vehicles, pedestrians, and road boundaries. Specifically, based on the short-time prediction results of the host vehicle and other vehicles as well as the information on road boundaries, the risk of the current road scene is assessed and resolved. Referring to Fig. 16 and Fig. 17, risk assessment and resolution module 532 includes four parts, namely, precondition judgment module 5321, out-of-road edge judgment module 5322, vehicle approaching judgment module 5323, and risk resolution module 5324. The implementation steps of each module are as follows:

In the first step, before the risk assessment is performed, the precondition judgment module 5321 is configured to perform condition judgment to determine whether the AEB is enabled and the working state of the automatic driving main system is active; if the AEB is not enabled and the automatic driving main system is active, then the risk assessment is operated, otherwise, the risk assessment is not operated.

At the same time, the precondition judgment module 5321 is also configured to determine whether an object that may have a collision is a movable object such as a vehicle or a stationary object such as a road edge, and if the object is a stationary object such as a road edge, a second step is performed; if it is a movable object such as a vehicle, a third step is performed.

In the second step, the out-of-road edge judgment module 5322 is configured to comprehensively compare the planned path output by the host vehicle's intelligent driving main system, the current speed and acceleration of the host vehicle with the location and shape of the road edge, and judge whether there is a collision risk between the host vehicle trajectory and the road edge in a future period time. It should be noted that the function of the out-of-road edge judgment module 5322 corresponds to the first risk assessment strategy described above.

Firstly, the out-of-road edge judgment module 5322 establishes the host vehicle coordinate system by taking the center of the rear axis of the host vehicle as an origin, taking the vehicle driving direction as an X-axis, and taking the direction perpendicular to the rear axis of the host vehicle to the left as a Y axis, and obtains the speed and acceleration of the host vehicle at the current moment, and the cubic curve equation of the trajectory planned by the automatic driving main system 51 (corresponding to the above first function curve fitted with the first planned path). Secondly, a road edge curve equation (corresponding to the above second function curve) is fitted in the host vehicle coordinate system. Then, a certain distance δ (according to the vehicle speed look-up table) from the coordinate origin along the X-axis direction is divided into N sampling points; the X coordinate of each sampling point is substituted into the trajectory equation and the road edge curve equation of the host vehicle planning to calculate the respective Y coordinates; the difference between the two Y coordinates is used to judge whether the absolute value of the result is less than Δd_1 (calibratable); if the absolute value of the difference between the Y coordinates of a certain sampling point is less than Δd_1, it is considered that there is a potential collision risk; and the X and Y coordinates of the point with collision risk (corresponding to the above collision risk location) are recorded.

Further, the heading angle of the host vehicle at the collision risk point can be obtained from the planned path output from the automatic driving main system 51 of the host vehicle and the collision risk point coordinates. The collision type is determined according to a collision location and a collision angle; the collision angle is determined according to an included angle between a vehicle heading angle (determined based on a driving trajectory) and a road edge; when the guardrail/road edge is a straight line, the collision angle θ is an included angle between a tangent line at an intersection point of the host vehicle trajectory and the guardrail/road edge and the straight line of the guardrail/road edge, and when the guardrail/road edge is a curved line, the collision angle θ is an included angle between a tangent line of the host vehicle trajectory and a tangent line of the guardrail/road edge.

Finally, in the pre-established first mapping relationship table among the collision type, the host vehicle speed, and the risk level, the target risk level corresponding to the collision type and the host vehicle speed is searched, and then the risk assessment result is determined, and the risk assessment result is sent to the redundancy control module 533 and the control arbitration module 534.

In the third step, the vehicle approaching judgment module 5323 determines a plurality of sampling moments within the time window T, predicts four boundary points of the host vehicle at each sampling moment when the host vehicle drives according to the first predicted trajectory S1, and predicts four boundary points of other vehicles at corresponding sampling moments when other vehicles drive according to the second predicted trajectory S2; furthermore, distances between two points of four boundary points of the host vehicle at each sampling moment and four boundary points of the nearest other vehicle are calculated, namely, a total of 4 × 4 = 16 distances between two points of the host vehicle and the nearest vehicle are calculated, the shortest distance and the collision boundary point pair of each sampling moment are obtained from the 16 distances, and the corresponding sampling moment is recorded. According to the time sequence, whether the shortest distance k is less than 0 is judged in turn. If there is a moment when k is less than 0, the risk assessment considers that there is a direct collision risk. If the shortest distance k is greater than 0, it is considered that there is no direct collision. The collision type of the host vehicle is judged to be front collision/front left side collision/front right side collision according to the location of the shortest distance node, and a risk level is determined based on the collision type and the relative speed between the host vehicle and other vehicles; the risk assessment result includes the collision type, the relative speed, and the risk level. Note that the function of the vehicle approaching judgment module 5323 corresponds to the second risk assessment strategy described above.

Of course, the risk level can also calculate the possible collision type and collision severity according to the heading angle, mass, and speed of the host vehicle without considering the AEB braking; the collision type is a front collision of the host vehicle, front side scratch of the host vehicle, front left side collision of the host vehicle, front right side collision of the host vehicle, rear left side collision of the host vehicle, and rear right side collision of the host vehicle; the collision severity is characterized by whether the vehicle attitude is controllable and the magnitude of the collision energy; in the calculation of the collision energy, the mass of the host vehicle, the speed of the host vehicle, the acceleration of the host vehicle, the collision type, the mass of the collision, and the shape of the collision should be taken into account; the collision is also called the obstacle.

It should be noted that if the risk assessment result of three out of five consecutive frames of data is that there is a collision risk, it is considered that the risk of the planning control result of the current automatic driving main system is unacceptable.

The risk resolution module 5324 plans the tentative behavior of the host vehicle, such as simple braking or steering, according to the risk level, the collision type, and the preliminary decision of the scenario, and performs the calculation. Referring to Fig. 16 and Fig. 17, the risk resolution module 5324 includes a braking calculation module and a fast path planning module; the braking calculation module is configured to calculate and predict whether a risk will occur after the braking or steering of the host vehicle is implemented, and if the risk will not occur after the tentative behavior is implemented, the tentative behavior is determined as the above target security protection strategy; if a risk occurs, the fast path planning module will plan a new path and determine the new path as a target security protection strategy and send the target security protection strategy to the redundancy control module 533.

If the risk level is S1, a tentative action such as a single longitudinal control such as a light brake is performed; if the risk assessment result is S2 or S3, the combined transverse and longitudinal control performs path planning; for the risk level being S2 or S3, the risk resolution module 5324 firstly predicts to perform braking according to the AEB deceleration through the braking calculation module, to judge whether the host vehicle will collide with the preceding vehicle, and if no collision occurs, directly performs braking according to the AEB deceleration. If the calculation result shows that the collision can still not be avoided by using AEB deceleration braking, then the risk resolution module 5324 plans an avoidance driving path (corresponding to the above second planned path) according to the current vehicle attitude, road edge, and other vehicle location via a fast path planning module.

The fast path planning module models a specific planning problem, considering that the vehicle runs on a structured road, and the vehicle running the structured road is not allowed to reverse so that the heading angle of the vehicle does not have an excessive included angle with the center line of the lane. The planning problem is to establish a constrained cost function, and the solution to the problem is obtained by finding the extreme value of the function. The steps are as follows.

A road center line is fitted as a guideline of a vehicle according to the road edge obtained by the auxiliary perception module 531, and a cubic curve equation of the guideline is fitted in the Cartesian coordinates; Frenet coordinate system conversion is performed according to the guideline, and geometric information about the road boundary and other target vehicles is converted into Frenet coordinates to obtain a planned avoidance driving path. It should be noted that the smoothness, safety, and comfort of the trajectory are considered in the normal driving trajectory planning, and only the safety is considered within the limit of the motion state of the vehicle in the rapid path planning module.

It should be noted that the out-of-road edge judgment module 5322, the vehicle approaching judgment module 5323, and the risk resolution module 5324 are all performed for vehicles from the perspective of a bird's eye view, and the host vehicle and other target vehicles are considered as a rectangle, and the size of the rectangle is defined by the vehicle type and the safety boundary threshold together.

The redundancy control module 533 tracks a security planning trajectory (corresponding to a second planned path) and outputs a control command according to a security planning result, namely, a target security protection strategy, in combination with the state of a current actuator.

The control arbitration block 534 executes the output of the control command of the monitoring protection system 53 or the control command of the automatic driving main system 51 according to the risk assessment result to cause the actuator 54 to execute the control command. If the risk assessment result is a risk-free assessment result, the control arbitration module 534 outputs a control command generated by the automatic driving main system 51 for the planned path planned by the own system; if the risk assessment result is an assessment result with risks, the control arbitration module 534 outputs a control command generated by the monitoring protection system 53 for the safety planning trajectory planned by the system itself. It should be noted that the above control command is also referred to as a control instruction.

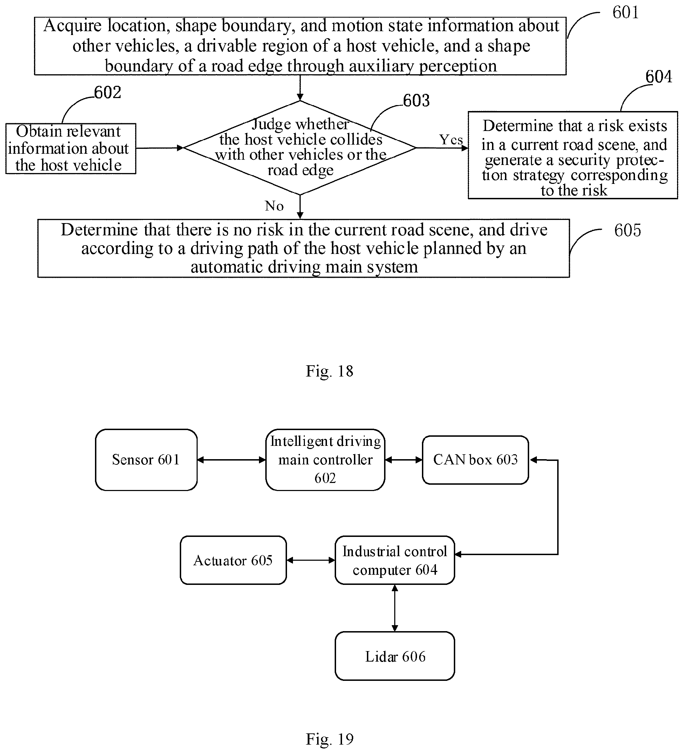

In an implementable scenario, referring to Fig. 18, the operational flow of vehicle risk avoidance is as follows:
Step 601: Acquire location, shape boundary, and motion state information about other vehicles, a drivable region of the host vehicle, and a shape boundary of a road edge through auxiliary perception.
Step 602: Obtain relevant information about the host vehicle.
Step 603: Judge whether the planned path of the host vehicle planned by the automatic driving main system 51 collides with a road edge or other vehicles based on all the above information; if so, perform step 604, and if not, perform step 605.
Step 604: Determine that a risk exists in the current road scene, and generate a security protection strategy corresponding to the risk.
Step 605: Determine that there is no risk in the current road scene, and drive according to the driving path of the host vehicle planned by the automatic driving main system.

In an implementable scenario, referring to Fig. 19, Fig. 19 is a structural diagram of a vehicle risk avoidance system provided by an embodiment of the present application, and the application and practice of the present application are further described in conjunction with Fig. 19. The intelligent driving system in the related art is realized by an intelligent driving main controller and a corresponding actuator. The present application obtains the vehicle risk avoidance system of the present application by improving the intelligent driving system in the related art; a CAN box 603 is connected between the intelligent driving main controller 602 and an actuator 605, and a monitoring protection system is deployed on an industrial control computer 604. The signals required by the monitoring protection system are forwarded via the CAN box 603 to the industrial control computer 604 for processing; the intelligent driving main controller 602 obtains scene information and other vehicle information via the sensor 601, and the industrial control computer 604 obtains more detailed and accurate scene information and other vehicle information via the lidar 606.

It can be seen from the above that in a vehicle risk avoidance system, in the present application, independent real-time dynamic monitoring is performed on an intelligent driving behavior under the current situation by adding a monitoring protection system, an expected functional safety risk is assessed, and corresponding measures are taken according to the risk assessment result, thereby improving the overall safety of the vehicle risk avoidance system.

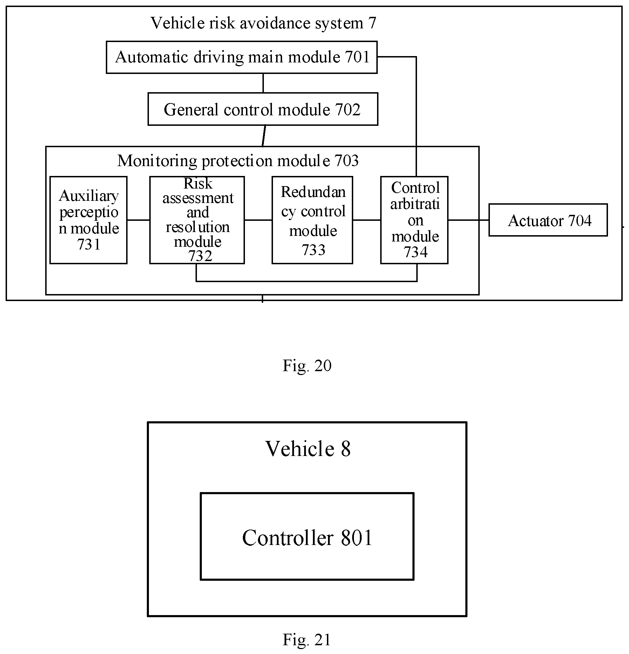

The embodiments of the present application provide a vehicle risk avoidance system, referring to Fig. 20; Fig. 20 is a safety architecture diagram of a vehicle risk avoidance system provided by an embodiment of the present application; the vehicle risk avoidance system 7 includes an automatic driving main module 701, a general control module 702, a monitoring protection module 703, and an actuator 704; the monitoring protection module 703 includes an auxiliary perception module 731, a risk assessment and resolution module 732, a redundancy control module 733, and a control arbitration module 734.

The automatic driving main module 701 is configured to obtain first motion state information of a target vehicle at a plurality of consecutive moments and output to the general control module 702.

The general control module 702 is configured to output the first motion state information to the monitoring protection module 703.

The auxiliary perception module 731 is configured to obtain first motion state information of a target vehicle and obstacle information of a target obstacle at a plurality of consecutive moments, the obstacle information including two or more of an obstacle type, an obstacle location, obstacle boundary information, and second motion state information.

The risk assessment and resolution module 732 is configured to execute a risk assessment strategy corresponding to the obstacle type according to the first motion state information and the obstacle information corresponding to each moment, to determine a risk assessment result of whether the target vehicle collides with the target obstacle; determine, if a plurality of risk assessment results corresponding to the plurality of moments satisfy a risk condition, a target risk assessment result from the plurality of risk assessment results, generate a target security protection strategy corresponding to the target risk assessment result, and output the target security protection strategy to an actuator 704 to execute the target security protection strategy.

In other embodiments of the present application, the risk assessment and resolution module 732 is further configured to generate a determination result of whether the plurality of risk assessment results satisfy the risk condition and output to the control arbitration module 734.

The redundancy control module 733 is configured to obtain the target security protection strategy if the determination result is that the plurality of risk assessment results satisfy the risk condition, and generate a monitoring protection control instruction according to the target security protection strategy and output to the control arbitration module 734.

The control arbitration module 734 is configured to obtain the determination result, the monitoring protection control instruction, and an automatic driving control instruction generated for a first planned path output by the automatic driving main module, and output a target control instruction to the actuator 704 according to the determination result to execute the target control instruction to avoid the collision risk, the first motion state information including the first planned path, and the target control instruction including the monitoring protection control instruction or the automatic driving control instruction.

The embodiments of the present application provide a vehicle, referring to Fig. 21; the vehicle 8 includes a controller 801, and the controller 801 is configured to operate the vehicle according to the following method:
obtaining first motion state information of a target vehicle and obstacle information of a target obstacle at a plurality of consecutive moments, the obstacle information including two or more of an obstacle type, an obstacle location, obstacle boundary information, and second motion state information;
executing a risk assessment strategy corresponding to the obstacle type according to the first motion state information and the obstacle information corresponding to each moment, to determine a risk assessment result of whether the target vehicle collides with the target obstacle; and
determining, if a plurality of risk assessment results corresponding to the plurality of moments satisfy a risk condition, a target risk assessment result from the plurality of risk assessment results, and generating a target security protection strategy corresponding to the target risk assessment result.

The embodiments of the present application provide a storage medium storing one or more computer programs, the one or more computer programs being executable by one or more processors to implement some of or all the steps of the methods described above. The storage medium may be transient or non-transient.

The embodiments of the present application provide a computer program including computer-readable codes; when the computer-readable codes are operated in a computer device, a processor in the computer device performs some of or all the steps of the above method.

The embodiments of the present application provide a computer program product including a non-transitory computer-readable storage medium storing a computer program which, when read and executed by a computer, performs some of or all the steps of the above method. The computer program product may be embodied in hardware, software, or a combination thereof. In some embodiments, the computer program product is embodied as a computer storage medium, and in other embodiments, the computer program product is embodied as a software product, such as a software development kit (SDK).

It should be noted here that the description of the embodiments above tends to emphasize the differences between the embodiments and that similarities or similarities can be referred to each other. The above description of the embodiments of the device, the storage medium, the computer program, and the computer program product is similar to the above description of the embodiments of the method with similar advantageous effects as the method embodiments. For technical details that are not disclosed in the embodiments of the device, the storage medium, the computer program, and the computer program product of the present application, reference is made to the description of the method embodiments of the present application.

It should be noted that the above description of the storage medium and device embodiments is similar to the above description of the method embodiments with similar advantageous effects as the method embodiments. For technical details that are not disclosed in the embodiments of the storage medium and device of the present application, reference is made to the description of the method embodiments of the present application.

The processor may be at least one of an application-specific integrated circuit (ASIC), a digital signal processor (DSP), a digital signal processing device (DSPD), a programmable logic device (PLD), a field programmable gate array (FPGA), a central processing unit (CPU), a controller, a microcontroller, and a microprocessor. It will be appreciated that the electronic devices implementing the functions of the processor may be other and that the embodiments of the present application are not specifically limited.

The above computer storage medium/memory may be a memory such as a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), and may also be a variety of terminals, such as mobile phones, computers, tablet devices, and personal digital assistants including one or any combination of the above memories.

It should be appreciated that reference throughout the specification to "one embodiment" or "an embodiment" means that a particular feature, structure, or characteristic described in connection with the embodiment is included in at least one embodiment of the present application. Thus, the appearances of the phrases "in one embodiment" or "in an embodiment" in various places throughout the specification do not necessarily refer to the same embodiment. Furthermore, the specific features, structures, or characteristics may be combined in any suitable manner in one or more embodiments. In the various embodiments of the present application, the size of the sequence numbers of the various steps/processes described above does not imply the order of execution, and the order of execution of the various steps/processes should be determined in terms of their functionality and inherent logic, and should not constitute any limitation on the implementation of the embodiments of the present application. The above serial numbers of the embodiments of the present application are merely for description and do not represent the advantages and disadvantages of the embodiments.

It should be noted that, as used herein, the terms "comprise/include", "contain", or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "comprise/include a ..." does not, without more constraints, preclude the existence of additional identical elements in the process, method, article, or apparatus that includes the element.

In the several embodiments provided by the present application, the disclosed devices and methods may be implemented in other ways. The device embodiments described above are merely schematic, for example, the division of the units is merely a logical function division, and in practical implementation, there may be other division manners, such as a plurality of units or components that may be combined, or may be integrated into another system, or some features may be omitted, or not performed. In addition, the coupling, direct coupling, or communication connection between the components shown or discussed may be through some interfaces, indirect coupling, or communication connections of devices or units, which may be electrical, mechanical, or other forms.

The unit described above as a separate part may or may not be physically separate, and the part shown as a unit may or may not be a physical unit; it can be located in one place or distributed to a plurality of network units. Some of or all the units can be selected according to the actual needs to realize the purpose of the solutions of the embodiment.

In addition, various functional units in various embodiments of the present application may all be integrated into one processing unit or each unit may be taken individually as one unit, or two or more units may be integrated into one unit; the integrated units described above may be implemented either in the form of hardware or in the form of hardware plus software functional units.

Those of ordinary skill in the art will appreciate that all or part of the steps for implementing the above method embodiments can be performed by hardware associated with program instructions, and the above program can be stored in a computer-readable storage medium, and when the program is executed, the steps including the above method embodiments are executed; whereas the above storage medium includes various media that can store program codes, such as mobile storage devices, ROM, magnetic disks, or optical disks.

Alternatively, the above-integrated unit of the present application, if implemented in the form of a software functional module and sold or used as an independent product, can also be stored in a computer-readable storage medium. Based on such an understanding, the technical solution of the present application, in essence, or in part contributing to the relevant art, can be embodied in the form of a software product, the computer software product is stored in a storage medium, including instructions for causing a vehicle terminal (which may be a personal computer, a server, or a network device, and the like) to execute all or part of the method described in the various embodiments of the present application. The above storage medium includes various media that can store program codes, such as mobile storage devices, ROM, magnetic disks, or optical disks.

The above is only the implementation of the present application, but the scope of protection of the present application is not limited to this, and any technical personnel familiar with the technical field can easily think of changes or replacements within the technical scope disclosed in the present application, which should be covered by the scope of protection of the present application.

## Claims

1. A vehicle risk avoidance method, comprising:
obtaining first motion state information of a target vehicle and obstacle information of a target obstacle at a plurality of consecutive moments, wherein the obstacle information comprises two or more of an obstacle type, an obstacle location, obstacle boundary information, and second motion state information;
executing a risk assessment strategy corresponding to the obstacle type according to the first motion state information and the obstacle information corresponding to each moment, to determine a risk assessment result of whether the target vehicle collides with the target obstacle; and
determining, if a plurality of risk assessment results corresponding to the plurality of moments satisfy a risk condition, a target risk assessment result from the plurality of risk assessment results, and generating a target security protection strategy corresponding to the target risk assessment result to avoid a collision risk.

2. The method according to claim 1, wherein the executing a risk assessment strategy corresponding to the obstacle type according to the first motion state information and the obstacle information corresponding to each moment comprises:
executing, if the obstacle type is a stationary obstacle type, a first risk assessment strategy corresponding to the stationary obstacle type for each moment according to the corresponding first motion state information and obstacle information when an autonomous emergency braking (AEB) function of the target vehicle is not enabled, the first risk assessment strategy comprising:
determining a first function curve of a first planned path of the target vehicle in two-dimensional space;
determining a second function curve of the target obstacle in the two-dimensional space according to the obstacle location and the obstacle boundary information;
determining a collision risk location at which the target vehicle collides with the target obstacle and a collision angle at which the target vehicle collides at the collision risk location according to the first function curve and the second function curve; and
determining the risk assessment result according to the collision risk location, the collision angle, and a first speed, the first motion state information comprising the first planned path and the first speed.

3. The method according to claim 2, wherein the determining a collision risk location at which the target vehicle collides with the target obstacle according to the first function curve and the second function curve comprises:
presetting a plurality of sampling points and obtaining an X-axis coordinate of each sampling point, the sampling point being a point at which the target vehicle may collide with the target obstacle;
substituting the X-axis coordinate of each sampling point into the first function curve and the second function curve to obtain a Y-axis coordinate under the first function curve and a Y-axis coordinate under the second function curve; and
calculating a difference value between the Y-axis coordinate under the first function curve and the Y-axis coordinate under the second function curve, and determining a coordinate of a sampling point corresponding to a difference value belonging to a difference value range as the collision risk location.

4. The method according to claim 2, wherein the determining the risk assessment result according to the collision risk location, the collision angle, and a first speed comprises:
determining a collision type according to the collision angle and the collision risk location;
pre-establishing a first mapping relationship table between the collision type, a speed, and a risk level; and
finding a target risk level corresponding to the collision type and the first speed in the first mapping relationship table, the risk assessment result comprising the collision type and the target risk level.

5. The method according to claim 1, wherein the executing a risk assessment strategy corresponding to the obstacle type according to the first motion state information and the obstacle information comprises:
executing, if the obstacle type is a movable obstacle type, a second risk assessment strategy corresponding to the movable obstacle type according to the first motion state information and the obstacle information when an autonomous emergency braking (AEB) function of the target vehicle is not enabled, the second risk assessment strategy comprising:
performing short-time prediction on a motion state of the target vehicle within a target time period according to a speed, acceleration, and heading angle of the target vehicle contained in the first motion state information to obtain a first predicted trajectory;
performing short-time prediction on a motion state of the target obstacle within the target time period according to a speed, acceleration, and heading angle of the target obstacle contained in the second motion state information to obtain a second predicted trajectory;
presetting a plurality of sampling moments within the target time period;
predicting, when the target vehicle drives according to the first predicted trajectory, a plurality of first boundary vertex locations of the target vehicle at each sampling moment, and predicting, when the target obstacle drives according to the second predicted trajectory, a plurality of second boundary vertex locations of the target obstacle at the corresponding sampling moment; and
determining the risk assessment result according to the plurality of first boundary vertex locations and the plurality of second boundary vertex locations corresponding to each sampling moment in the plurality of sampling moments.

6. The method according to claim 5, wherein the determining the risk assessment result according to the plurality of first boundary vertex locations and the plurality of second boundary vertex locations corresponding to each sampling moment in the plurality of sampling moments comprises:
calculating, for each sampling moment, a distance between any two boundary vertex locations based on the plurality of first boundary vertex locations and the plurality of second boundary vertex locations to obtain a plurality of distances;
judging, for the plurality of distances corresponding to the plurality of sampling moments, a size relationship between each distance and a distance threshold according to a time sequence;
determining, if there is a distance less than the distance threshold, a collision type of the target vehicle according to the distance and a first boundary vertex location corresponding to the distance; and
determining the risk assessment result based on the speed of the target vehicle, the speed of the target obstacle, and the collision type.

7. The method according to claim 6, wherein the judging, for the plurality of distances corresponding to the plurality of sampling moments, a size relationship between each distance and a distance threshold according to a time sequence comprises:
determining, for a plurality of distances corresponding to each sampling moment in the plurality of sampling moments, a shortest distance among the plurality of distances as a distance between the target vehicle and the target obstacle at the sampling moment to obtain the plurality of distances corresponding to the plurality of sampling moments; and
judging the size relationship between each distance and the distance threshold according to the time sequence.

8. The method according to claim 6, wherein the determining the risk assessment result based on the speed of the target vehicle, the speed of the target obstacle, and the collision type comprises:
determining a relative speed between the target vehicle and the target obstacle based on the speed of the target vehicle and the speed of the target obstacle;
pre-establishing a second mapping relationship table among the collision type, the relative speed, and a risk level; and
finding a target risk level corresponding to the collision type and the relative speed in the second mapping relationship table, the risk assessment result comprising the collision type and the target risk level.

9. The method according to any one of claims 1 to 8, wherein the determining a target risk assessment result from the plurality of risk assessment results comprises:
determining a risk assessment result with a highest frequency among the plurality of risk assessment results as the target risk assessment result; or
determining a risk assessment result with a highest risk level among the plurality of risk assessment results as the target risk assessment result.

10. The method according to any one of claims 1 to 8, wherein the generating a target security protection strategy corresponding to the target risk assessment result comprises:
determining a security protection strategy set corresponding to the risk level according to the risk level of the target risk assessment result;
predicting whether a collision between the target vehicle and the target obstacle will occur after implementing security protection strategies according to a priority order of the security protection strategies in the security protection strategy set;
if so, predicting to implement a security protection strategy corresponding to the next high priority until it is predicted that no collision will occur between the target vehicle and the target obstacle, and determining the security protection strategy for which no collision will occur as the target security protection strategy; and
if not, determining the security protection strategy as the target security protection strategy.

11. The method according to claim 10, wherein the method further comprises that the security protection strategy comprises at least one of the following: simple braking and steering, enabling an autonomous emergency braking (AEB) function to brake, and generating a second planned path.

12. A vehicle risk avoidance system, comprising an automatic driving main module, a general control module, a monitoring protection module, and an actuator, the monitoring protection module comprising an auxiliary perception module and a risk assessment and resolution module, wherein
the automatic driving main module is configured to obtain first motion state information of a target vehicle at a plurality of consecutive moments and output to the general control module;
the general control module is configured to output the first motion state information to the monitoring protection module;
the auxiliary perception module is configured to obtain first motion state information of a target vehicle and obstacle information of a target obstacle at a plurality of consecutive moments, the obstacle information comprising two or more of an obstacle type, an obstacle location, obstacle boundary information, and second motion state information; and
the risk assessment and resolution module is configured to execute a risk assessment strategy corresponding to the obstacle type according to the first motion state information and the obstacle information corresponding to each moment, to determine a risk assessment result of whether the target vehicle collides with the target obstacle; determine, if a plurality of risk assessment results corresponding to the plurality of moments satisfy a risk condition, a target risk assessment result from the plurality of risk assessment results, generate a target security protection strategy corresponding to the target risk assessment result, and output the target security protection strategy to an actuator to execute the target security protection strategy to avoid a collision risk.

13. The system according to claim 12, further comprising a redundancy control module and a control arbitration module, wherein
the risk assessment and resolution module is further configured to generate a determination result of whether the plurality of risk assessment results satisfy the risk condition and output to the control arbitration module;
the redundancy control module is configured to obtain the target security protection strategy if the determination result is that the plurality of risk assessment results satisfy the risk condition, and generate a monitoring protection control instruction according to the target security protection strategy and output to the control arbitration module; and
the control arbitration module is configured to obtain the determination result, the monitoring protection control instruction, and an automatic driving control instruction generated for a first planned path output by the automatic driving main module, and output a target control instruction to the actuator according to the determination result to execute the target control instruction to avoid the collision risk, the first motion state information comprising the first planned path, and the target control instruction comprising the monitoring protection control instruction or the automatic driving control instruction.

14. A vehicle, comprising a controller, wherein
the controller is configured to operate the vehicle according to the method according to at least one of claims 1 to 11.

15. A storage medium storing thereon one or more computer programs executable by one or more processors to implement the vehicle risk avoidance method according to any one of claims 1 to 11.
